# FASCICULE DE BREVET EUROPEEN

(11) **EP 1 349 768 B1**
(45) Date de publication et mention de la délivrance du brevet: **18.10.2006**
(21) Numéro de dépôt: 01270452.4
(22) Date de dépôt: 11.12.2001
(51) Int. Cl.: B62K 15/00, B62K 21/12, B62M 3/08

(54) **BICYCLETTE DEMONTABLE A GUIDON ET PEDALES DE GABARIT REDUIT**
DEMONTIERBARES FAHRRAD MIT LENKER UND PEDALEN, DIE EINEN EINGESCHRÄNKTEN SPIELRAUM AUFWEISEN
DETACHABLE BICYCLE WITH RESTRICTED CLEARANCE HANDLEBAR AND PEDALS

(30) Priorité: 14.12.2000 FR 0016276
(43) Date de publication de la demande: 08.10.2003
(73) Titulaire: ELFANDI, Patrice, 75006 Paris (FR)
(72) Inventeur: ELFANDI, Patrice, 75006 Paris (FR)
(86) Numéro de dépôt international: PCT/FR2001/003906
(87) Numéro de publication internationale: WO 2002/047963

(56) Documents cités:
- WO-A-99/11512
- DE-C- 100 303
- DE-U- 29 513 779
- FR-A- 1 514 213
- FR-A- 2 203 347
- FR-A- 2 726 803
- GB-A- 572 157
- GB-A- 1 112 828
- JP-A- 50 055 045
- PATENT ABSTRACTS OF JAPAN vol. 1999, no. 03, 31 mars 1999 (1999-03-31) & JP 10 338182 A (IMAMURA YUJI), 22 décembre 1998 (1998-12-22)

## Description

L'invention concerne une bicyclette traditionnelle démontable en éléments, munie d'une potence qui permet d'orienter la barre de guidon parallèlement à la roue avant et de pédales repliables qui permettent d'obtenir un gabarit minimal pour en faciliter le transport, et dont les composants sont fiables, sans danger pour l'utilisateur et standards afin de pouvoir équiper tous les cadres.

Une bicyclette démontable avec potence permettant d'orienter le guidon et pédales repliables est connue notamment par le document Patrice ELFANDI WO 02-47963 A1 dans lequel les sections du cadre ont des jonctions mâle-femelle constituées par le tube du cadre lui-même, une partie est la partie femelle, l'autre contient la partie mâle formée par un pêne de verrou qui comprend plusieurs parties qui s'emboîtent et compriment entre elles une ou plusieurs bagues élastiques lorsque l'extrémité du pêne bute sur le fond placé dans la partie femelle. Les jonctions sont munies d'un dispositif de connexion des câbles qui est assuré par un pont mobile sous l'effet de ressorts antagonistes. La potence de guidon comprend deux parties superposées, le sommet de la partie basse est muni d'un relief dans lequel s'emboîte un relief complémentaire situé sur la base de la partie haute,laquelle s'enfile sur une tige qui prolonge vers le haut la partie basse ; la partie haute est fixée à la partie basse par vissage d'une molette sur le filetage situé sur l'extrémité supérieure de la tige. Les pédales sont composées d'une semelle non pliante dont les barreaux coulissent à la manière d'une tiroir sur deux axes articulés, la fixation de la semelle s'effectue par des crochets s'engageant sous l'effet de ressorts dans des trous ménagés dans les axes articulés, leur dégagement s'effectue par pression simultanée sur des boutons poussoirs situés sur les barreaux.

Dans les documents WO 02-47963 A1, les jonctions mâle-femelle ont un pêne adapté en taille et en forme au tube du cadre rendant difficile la standardisation des composants nécessitée par la multiplicité actuelle des tubes de cadres ; par ailleurs, la compression de la (ou des) bague(s) élastique(s) lorsque le pêne bute au fond de la partie femelle tend a écarter celle-ci de la partie mâle au lieu de les maintenir accolées causant un défaut de jonction ; le système de connexion utilise un pont mobile dont le volume important rend difficile voire impossible la disposition de plusieurs câbles sur le même tube et empêche donc de monter un dérailleur.

La présente invention vise à pallier à ces inconvénients et propose une amélioration consistant à monter dans les tubes au voisinage de la section une pièce d'ajustage qui permet de standardiser le pêne ainsi utilisable sur tous types et diamètres de tubes ; une meilleure jonction est assurée par un pêne propulsé dans la partie femelle par un ressort, la bague élastique n'étant plus déformée par compression ; enfin un système de connexion des câbles par rotation de cylindres transversaux couplés permet de disposer sur un même tube plusieurs câbles en parallèle, donc l'interruption ou le rétablissement simultané de leur continuité.

Dans le document WO 02-47963 A1, la fixation des deux parties de la potence de guidon par vissage d'une molette sur l'extrémité filetée de la tige est dangereuse du fait que celle-ci dépasse de la molette et peut blesser l'utilisateur.

La présente invention vise à pallier cet inconvénient et propose de fixer les deux parties de la potence par un système à bague élastique déformable sans danger d'utilisation, manoeuvré par une manette semblable à celui utilisé dans la jonction des tubes du cadre.

Dans le document WO 02-47963 A1, le système de fixation de la semelle de pédale par crochet et poussoirs est fragile et sujet à dysfonctionnement, de plus, la semelle libérée coulisse sur les axes articulés et retenue d'aucune manière se détache de ceux ci en fin de course.

La présente invention vise à pallier à ces inconvénients et propose un mode de fixation fiable de la semelle par un simple vissage à l'extrémité d'un troisième axe articulé ou sur le moignon d'un troisième axe en deux parties ; par ailleurs un système de butée disposé sur les axes articulés empêche la semelle de se détacher en bout de course.

Le système de jonction des parties du cadre de la bicyclette démontable selon l'invention (notamment pour les bicyclettes à cadre à deux tubes) est remarquable, en ce que le pêne n'est pas directement monté dans la lumière du tube, mais par l'intermédiaire d'une pièce d'ajustage caractérisée en ce qu'elle est pleine, adaptée au diamètre et au profil du tube dans lequel elle est montée par vissage, sertissage, rivetage....

Un alésage axial ou parallèle à l'axe est destiné à un pêne caractéristique en ce qu'il pénètre automatiquement la partie femelle de l'ajustage, sa racine est solidaire d'un châssis qui coulisse dans l'alésage axial sous l'action d'un ressort adossé au fond de la pièce d'ajustage, ladite racine a une alésage central dans lequel coulisse la tige porteuse de la partie distale du pêne et est munie à son extrémité opposée d'une manette à came dont la manoeuvre attire la partie distale vers la racine et déforme la (ou les) bague(s) élastiques. Le dispositif de connexion des câbles est remarquable en ce que la partie avant de la structure fixe est entourée d'un tube fixe dans lequel coulisse la structure mobile en deux parties ; la partie antérieure reliée au câble de commande (poignée) est munie d'un ressort de rappel souple adossé à l'extrémité antérieure du tube fixe, ce ressort tend constamment à pousser la partie avant de la structure mobile vers la section et tient lieu de moyen de retenue, l'extrémité postérieure de la partie avant de la structure mobile (ou l'extrémité du câble) est terminée par un appendice en forme de champignon qui comprend une portion de diamètre étroit (ou col) et une tête (ou une bille) de grand diamètre qui saille constamment dans l'intervalle de la section, une faible force étant susceptible de pousser vers l'avant la structure mobile contre la force du ressort de rappel, l'extrémité antérieure de la structure mobile arrière est munie d'un cylindre transversal qui répond à la section et qui est mobile avec la structure sur laquelle il est monté pivotant sur son axe transversal. L'extrémité postérieure de la structure mobile arrière est reliée au câble (frein ou dérailleur) qui tient lieu de moyen de retenue.

Une portion de la surface cylindrique dudit cylindre de la structure mobile arrière est munie d'une lumière circulaire de grand diamètre prolongée par une découpe linéaire sur un arc de ladite surface cylindrique, la lumière circulaire a un diamètre légèrement supérieur à celui de la tête de l'appendice qui prolonge la structure mobile avant, et donne accès à un évidement ménagé à l'intérieur du cylindre susceptible de loger entièrement la tête ; la découpe linéaire a une largeur légèrement supérieure au diamètre du col de l'appendice. La partie postérieure de la structure fixe arrière comporte une butée qui peut être le fond d'un tube fixe dans lequel coulisse la structure mobile arrière, et constitue le moyen de retenue de la structure mobile vers l'arrière. Le moyen d'entraînement est constitué par l'appendice et le cylindre transversal des parties mobiles avant et arrière lorsqu'elles sont mises en contact au niveau de la section : la.tête de l'appendice de la structure avant tend constamment à occuper la cavité interne du cylindre via la lumière circulaire. La rotation du cylindre à l'aide d'une manette latérale fixée sur la base d'un des cylindres, permet la rotation et engage le col de l'appendice de la structure mobile avant dans la découpe de la surface cylindrique, positionnement du cylindre qui enferme la tête de l'appendice dans la cavité du cylindre et solidarise entre elles les structures mobiles avant et arrière rétablissant la transmission du mouvement (donc la continuité du câble). La manoeuvre inverse permet la séparation des structures mobiles, l'interruption de la continuité du câble et le démontage des deux parties du cadre.

D'autres aspects, buts et avantages de la présente invention ainsi que le détail du fonctionnement apparaissent mieux à la lecture de la description détaillée suivante donnée à titre d'exemple non limitatif et faite en référence aux dessins annexés sur lesquels,
- La figure 1 est une vue de bicyclette à cadre 2 sections (2 parties),
- La figure 2 une vue de bicyclette à cadre 4 sections (4 parties),
- La figure 3 est une vue du dessus de branchement mâle femelle muni d'un dispositif interrupteur de câble au niveau de la section du tube,
- Les figures 4 et 5 sont des coupes verticales selon AA et B-B de la figure 3 d'un branchement mâle femelle muni d'un dispositif interrupteur de câble,
- La figure 6 est une vue de dessus d'un branchement mâle femelle muni d'un pêne mobile et d'un dispositif interrupteur de câble (verrou en position de déverrouillage),
- La figure 7 est une vue du branchement figure 6 (verrou en position de verrouillage, portions de tubes séparées),
- La figure 8 est une coupe longitudinale de dispositif interrupteur de câble selon C-C des figures 6 et 7 avec les structures mobiles solidarisées par le pont d'entraînement,
- La figure 9 est une coupe longitudinale du dispositif interrupteur de câble selon C-C des figures 6 et 7 avec les structures mobiles bloquées chacune sur une partie de la structure fixe,
- La figure 10 est une vue en perspective d'un dispositif interrupteur de câble,
- La figure 11 est une vue du dispositif destiné à réduire le gabarit du guidon,
- Les figures 12 et 13 sont des coupes longitudinales, selon l'axe, de la semelle de pédale du dispositif destiné à réduire le gabarit du pédalier, et une coupe de cet axe selon D-D,
- La figure 14 est une coupe verticale d'un mode de réalisation d'un embout plein ou d'un pêne dormant à deux gorges,
- La figure 15 est une vue en perspective d'un mode de réalisation d'une structure mobile de dispositif interrupteur de câble avec prolongement en crochet,
- Les figures 16, 17, 18, 19 sont des coupes longitudinales selon l'axe de plusieurs modes de réalisation de la pédale.
- Les figures 20, 21, et 22, 23 sont des coupes longitudinales de modes de réalisation de l'embout mâle et du pêne.

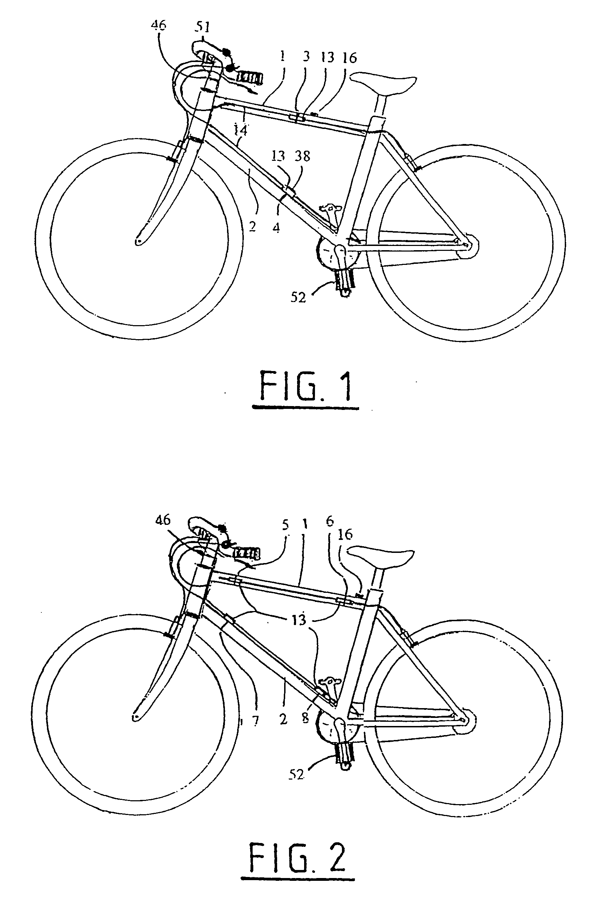

Suivant les figures 1 et 2, le cadre de bicyclette représenté est sectionné sur les tubes superposés 1 et 2 (de section ovale), sur la figure 1 : cadre à 2 sections 3 et 4 (2 éléments), sur la figure 2 : cadre à 4 sections 5, 6, 7, 8 (4 éléments) munis de dispositifs interrupteurs de câbles 13, d'une molette ou une clé 16 et d'un dispositif réducteur du gabarit du guidon 46. La pédale 52 est rabattue contre le bras de la manivelle.

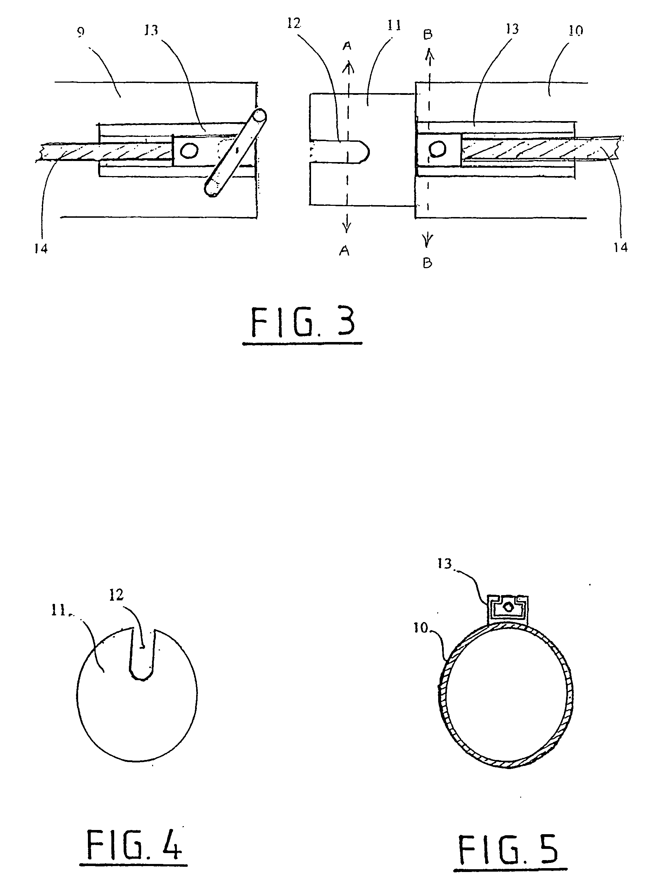

Suivant la figure 3 est représenté un branchement mâle-femelle qui comprend : un tube creux 9, l'autre 10 muni d'un embout plein 11 comportant une gorge radiale 12 sur la génératrice correspondant à l'interrupteur de câble 13 fixé ici comme le câble 14 au dessus du tube.

Suivant les figures 4 et 5, le branchement mâle-femelle est représenté en coupe au niveau de l'embout plein 11 avec sa gorge 12, au niveau de l'extrémité du tube comportant l'interrupteur de câble. 13.

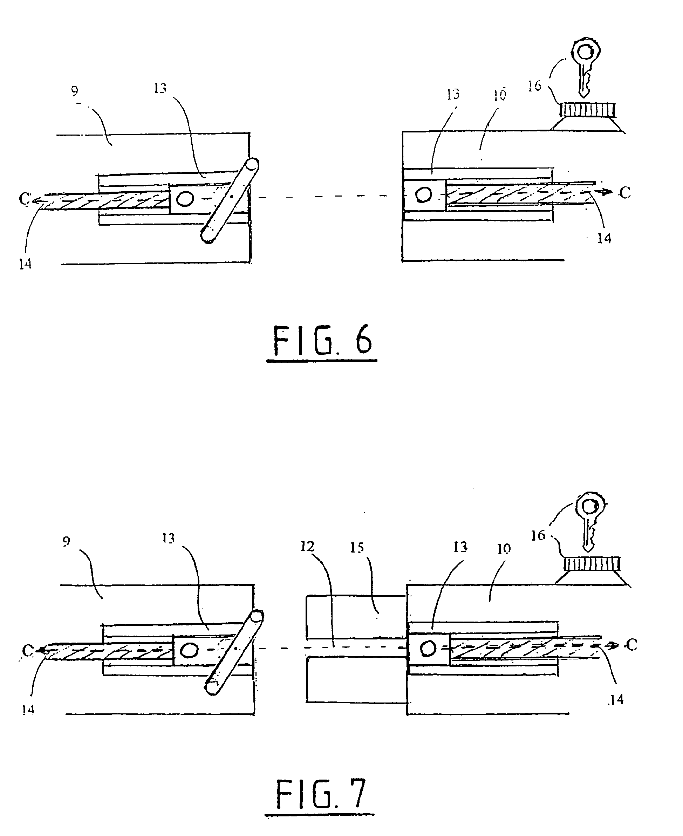

Suivant les figures 6 et 7 est représenté un branchement à embout mobile qui comprend : un tube creux 9, l'autre 10 muni d'un embout mobile (pêne dormant de verrou) 15 comportant une gorge radiale 12 sur la génératrice correspondant à l'interrupteur de câble 13 fixé ici comme le câble 14 au dessus du tube et manoeuvré par une molette ou une clé 16.

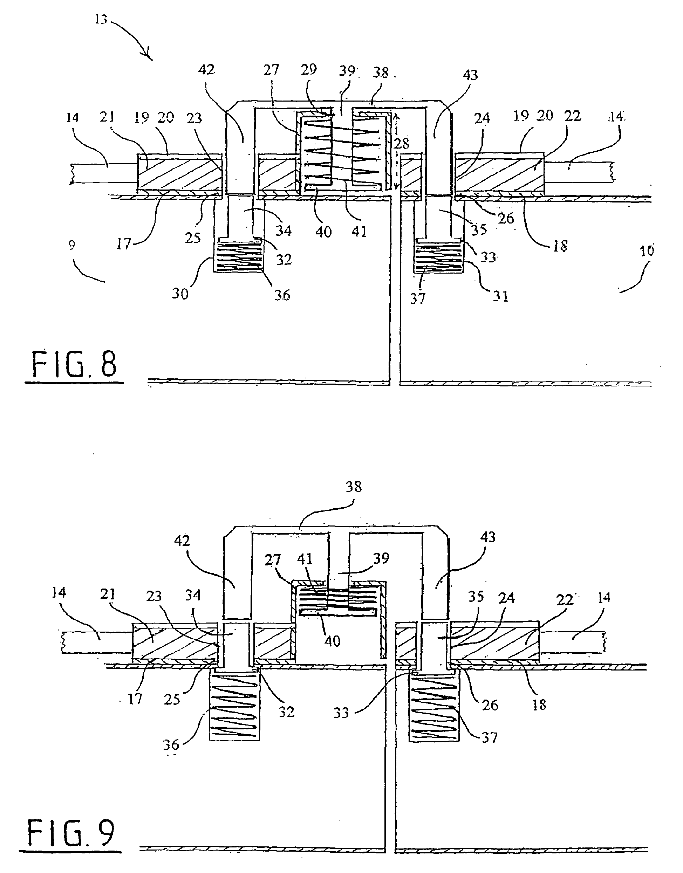

Suivant les figures 8 et 9 est représenté un interrupteur de câble 13 qui comprend une structure fixe divisée en deux parties 17, 18, formant une glissière limitée par deux berges 19,20 dans laquelle sous l'action des câbles 14 se déplacent deux structures mobiles mobiles 21, 22 traversées de part en part chacune par un orifice circulaire 23, 24 en regard d'orifices 25, 26 situés sur chaque partie de la structure fixe et le tube du cadre, une des structures mobiles 21 est munie entre son orifice circulaire 23 et son extrémité libre, d'un cylindre 27 de hauteur 28 double de l'épaisseur de la structure mobile, sa base libre comporte un orifice central 29, chaque structure fixe est pourvue en regard des orifices 25, 26 d'un petit cylindre 30, 31 dans lequel coulisse un piston 32, 33 dont les prolongements 34, 35 tendent constamment à se loger dans les orifices 23, 25, et 24, 26, poussés par les ressorts 36, 37 Le pont d'entraînement 38 enjambe le cylindre 27 et comprend un axe médian 39 qui pénètre dans le cylindre par l'orifice 29 et se termine par un plateau circulaire 40 qui sert d'adossement au puissant ressort 41; deux jambes 42, 43, pénètrent les orifices 23, 25, et 24, 26, où elles s'affrontent aux prolongements des pistons 34, 35.

On comprend bien dés lors, que le dispositif conforme à l'invention permette immédiatement l'interruption et le rétablissement instantané de la continuité des câbles au niveau des sections d'un cadre; ainsi figure 8, le pont d'entraînement 38 repose fermement sur la base libre du cylindre 27, attiré par l'intermédiaire de l'axe médian 39, par le puissant ressort 41 qui tend constamment à repousser le plateau circulaire 40, les extrémités des jambes 42, 43 pénètrent les orifices 23, 25 et 24, 26 repoussant les prolongements 34, 35 des pistons 32, 33 dont les ressorts 36, 37 sont plus faibles que le ressort 41, jusqu'à la surface de séparation des structures mobiles 21, 22 avec la structure fixe 17, 18 qui sert de glissière : la continuité du câble est assuré par le pont qui solidarise les structures mobiles 21, 22; sur la figure 9 lorsque le pont d'entraînement 38 est éloigné de la base libre du cylindre 27 qui lui sert de plan contre la traction du puissant ressort 41, les extrémités des jambes 42, 43, libèrent les orifices 23, 25 et 24, 26 que les prolongements 34, 35, des petits pistons 32, 33 viennent simultanément occuper poussés par les petits ressorts 36, 37; les structures mobiles 21, 22, sont bloquées respectivement aux parties de structure fixe 17, 18 qui peuvent alors être séparées sans que le câble 14 ne subisse de modification de tension.

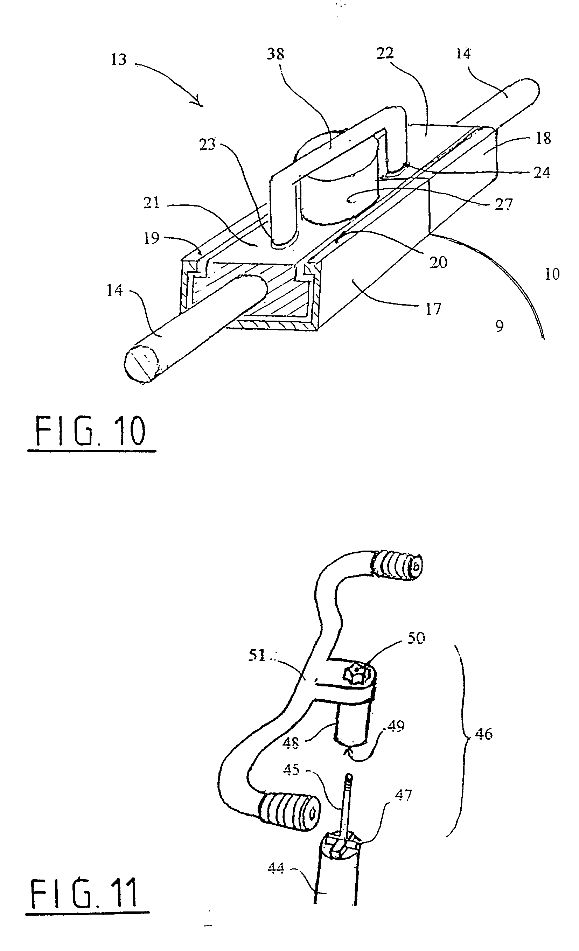

Suivant la figure 10, est représenté un interrupteur de câble 13 vu en perspective avec les deux parties de structure fixe 17, 18, fixées sur les deux parties de tubes 9, 10, et formant une glissière limitée par les berges 19, 20; les structures mobiles 21, 22, sont chacune solidaire d'une extrémité du câble 14; le pont d'entraînement (38) repose sur le plan du cylindre 27 ses jambes pénètrent les orifices circulaires 23, 24 des structures mobiles.

Suivant la figure 11 est représenté un guidon muni d'un dispositif 46 dans lequel la potence est sectionnée en deux parties : la partie inférieure 44, est munie d'une tige centrale 45 dont la partie supérieure est filetée, la base de ladite tige centre un relief en croix 47, la partie supérieure 48 s'enfile sur la tige 45 et comporte à sa base une croix en creux 49, qui s'emboîte dans la croix en relief 47; la vis moletée 50 permet de désengrener les reliefs ou de les engrener afin de placer la ligne du guidon 51 dans une position perpendiculaire à la roue ou parallèle à celle-ci pour réduire des 2/3 en largeur le gabarit de l'élément avant.

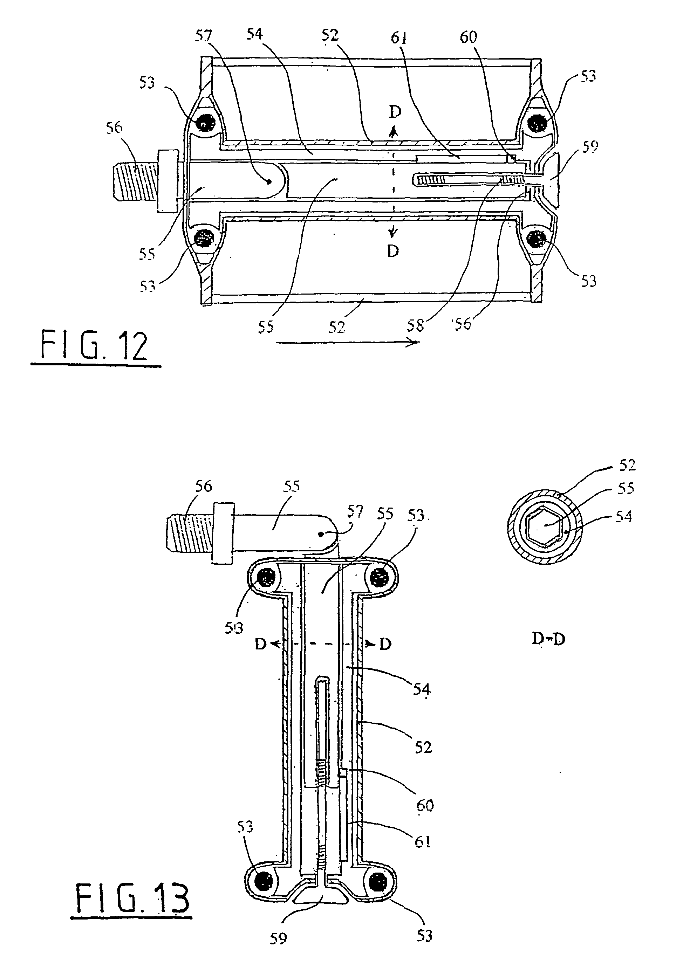

Suivant les figures 12 et 13 est représentée une semelle de pédale 52, les roulements à billes 53 sont fixés sur un tube d'acier 54 ajusté sur l'axe d'acier central 55, de profil hexagonal fixé à la manivelle par une extrémité filetés 56, l'axe d'acier 55 a une articulation 57 et une structure vissante 58 sur laquelle l'extrémité 56 du tube 54 est visée par une molette profilée 59, l'extrémité libre de l'axe d'acier 55 est munie d'un ergot 60 qui coulisse dans une fente (61) prévue sur le 1/3 distal d'une génératrice du tube 54, (fig. 13 semelle rabattue),

On comprend bien dés lors que le dispositif selon l'invention permette immédiatement de rabattre la semelle de pédale sur l'articulation 57 de son axe 55 la molette 59 saisie entre pouce et index est dévissée, le tube 54 solidaire de la semelle de pédale 52 est déplacé dans le sens de la flèche jusqu'à ce que l'articulation 57 soit découverte : la Pédale peut être rabattue contre le bras de la manivelle, et le gabarit de l'élément arrière réduit de moitié en largeur (figure 13).

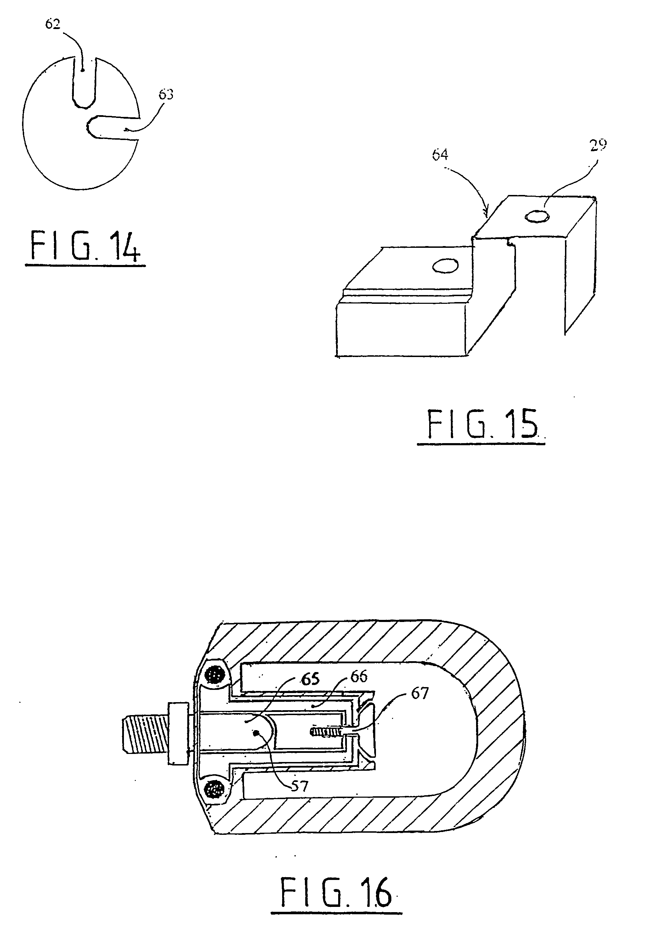

Suivant la figure 14 est représenté un embout a deux gorges 62, 63.

Suivant la figure 15 est représenté un prolongement en crochet 64, dont la portion supérieure sert de base au pont d'entraînement 38, et est percé comme le cylindre 27 d'un orifice 29,

Suivant la figure 16, est représenté un mode de réalisation de pédale selon l'invention à un seul roulement à billes où l'axe 65 et le tube d'acier 66 sont plus courts, la structure vissante 67 est au centre de la semelle de pédale.

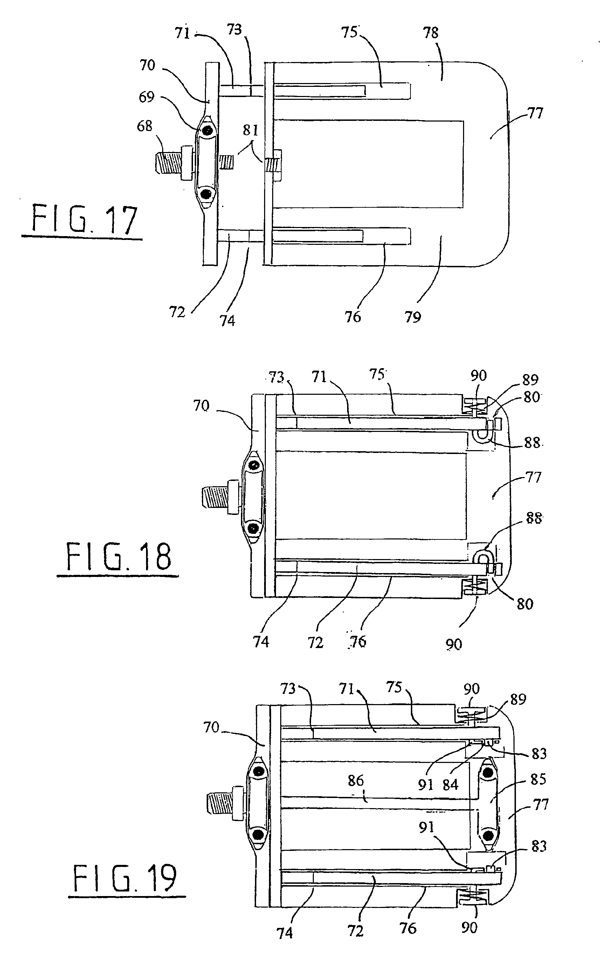

Suivant la figure 17 est représentée un autre mode de réalisation de la pédale selon l'invention : sur l'axe 68 tourne l'unique roulement à billes 69 serti dans l'armature en acier 70, dont chaque extrémité porte un axe d'acier 71, 72; les axes 71, 72 sont parallèles et pourvus chacun d'une articulation 73, 74, les axes desdites articulations appartiennent au plan formé par les axes 71, 72, lesdits axes 71, 72 coulissent dans les tubes d'acier 75, 76, incorporés aux barreaux avant 78 et arrière 79 d'une semelle de pédale moulée 77. Des moyens de fixation 81 fixent la semelle 77 sur l'armature 70, leur libération permet à la semelle de coulisser sur les axes parallèles 71, 72, de découvrir les articulations 73, 74, et de rabattre la semelle contre les bras de manivelle.

Suivant les figures 18 et 19 , l'extrémité interne de la semelle 77 est simplement calée contre l'armature 70 et fixée à elle par des structures vissantes situées à l'extrémité des axes 71, 72. Dans un autre mode de réalisation, les axes 71, 72, sont munis chacun d'un orifice 80 dans lequel pénètre constamment l'extrémité d'un crochet en U 88, sous l'action d'un ressort 89; la pression simultanée des boutons à pression 90 dégage ladite extrémité et permet de mobiliser la semelle 77 sur les axes 71, 72.et de la replier. De façon similaire, les axes 71, 72, peuvent être munis d'une clavette 83 constamment engagée dans l'orifice 84 d'une platine 91, sous l'effet d'un ressort 89.

Suivant la figure 19, un deuxième roulement à billes 85 peut être moulé dans la semelle 77 à son extrémité libre, et un axe central en acier 86 peut se brancher sur le roulement à billes 69.

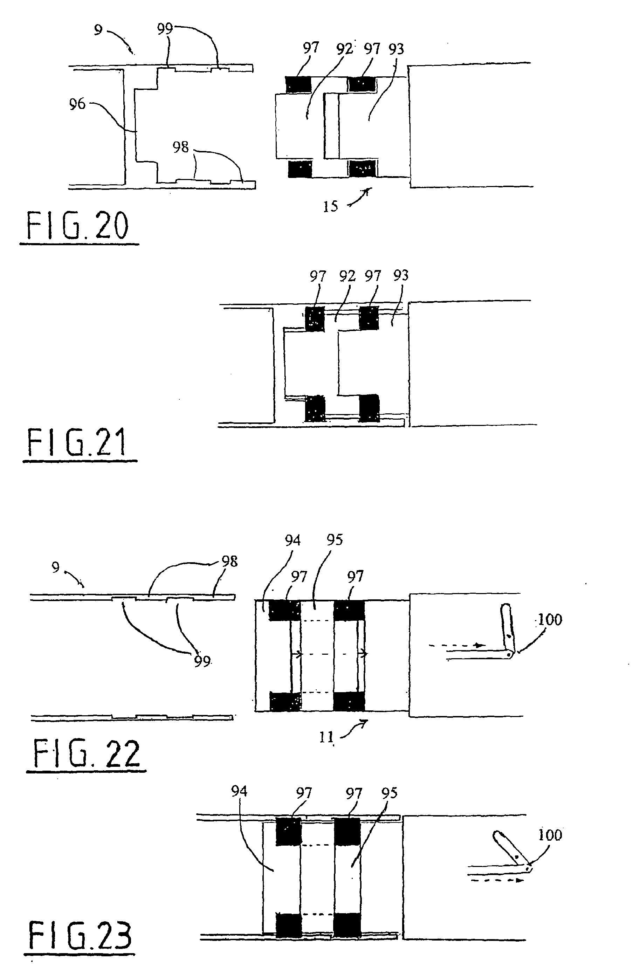

Suivant les figures 20 et 21 est représenté un mode de réalisation du pêne 15 en plusieurs parties 92, 93, qui sont poussées pendant le deuxième tour de la molette 16, et s'emboîtent quand l'extrémité de pêne arrive au fond 96, de la partie femelle, et compriment les bagues ou joints élastiques 97, dont la déformation par écrasement bloque fermement le pêne dans la partie femelle 9 qui peut être munie de zone de section légèrement plus étroite 98, afin de ménager entre elles des loges 99 destinés aux bagues de blocage 97 lorsqu'elles sont écrasées.

Suivant les figures 22 et 23 est représenté un mode de réalisation de l'embout mâle 11, dont la, ou les parties distales 94, 95 mobiles dans la parties femelle 9, se rassemblent lorsque la partie la plus distale 94 est attirée dans le sens de la flèche vers la racine de l'embout par un levier 100, assujetti à une manette à came (un système à crémaillère ou tout autre moyen), elles compriment les bagues (ou joints) élastiques 97, dont la déformation par écrasement bloque l'embout dans ladite partie femelle qui peut être munie de zones de section légèrement plus étroite 98, afin de ménager entre elles des loges 99, destinées aux bagues de blocage 97 lorsqu'elles sont écrasées.

Dans l'exemple de réalisation précédemment décrit, on a considéré que le non paralèlisme des tubes superposés du cadre ainsi que leur profil ovale suffisaient à conférer au cadre une rigidité comparable à celle d'un cadre monobloc, il est bien entendu que.le nombre et le profil des tubes du cadre peuvent être différents de ceux du mode de réalisation préférentielle.

Egalement, la forme de réalisation précédemment décrite prévoit l'existence d'un cylindre creux 27, sur l'une de structures mobiles 21, un prolongement en crochet (figure 15) de même hauteur 29, de longueur et largeur égale à la distance séparent les berges 19. 20 de la structure fixe peut remplacer ledit cylindre

Egalement, lorsque la bicyclette a un cadre à quatre sections (figure 2) le segment de câble reliant les structures mobiles du segment de cadre situé entre l'élément avant et l'élément arrière pourra avantageusement être remplacé par une tige en métal.

Egalement, le dispositif réducteur du gabarit du guidon prévoit une croix en saillie sur la partie inférieure et une croix en creux sur la partie supérieure du montant il est bien entendu que la disposition inverse, d'autres formes géométriques notamment le carré, ou d'autres reliefs notamment en L ou en L inversé, quart de pas de vis etc.... sont possibles comme la structure vissante prévue peut être tige mâle, molette femelle ou inversement, et la molette remplacée par tout autre moyen de fixation.

Egalement, le dispositif réducteur du gabarit de la semelle de pédale décrit une semelle à deux roulements avec un axe et un tube de profil hexagonal de façon à éviter la rotation du tube sur l'axe, il est bien compris que ce profil peut être quelconque, et comme précédemment, la structure vissante peut être axe mâle, molette femelle ou inversement ou être remplacée par tout autre moyen de fixation

Il est également bien compris que dans les différents modes de réalisation de la pédale (figures 17 à 19), la semelle 77, peut être fixée à l'armature 70 par tout autre moyen que ceux décrits.

Il est enfin bien compris que ces dispositifs peuvent être utilisés séparément, que la réalisation des éléments du cadre et des pièces de divers dispositifs, peut se faire en tous matériaux notamment synthétiques (plastique, carbone, fibre de verre, céramique...), que la présente invention n'est nullement limitée aux formes de réalisation décrites et représentées et que l'homme du métier saura y apporter variante ou modification conforme à son esprit.

## Revendications

1. Bicyclette avec cadre démontable, tube de potence permettant d'orienter le guidon, et pédales rabattables pour en faciliter le transport **caractérisé par** des sections de cadre (3,4), (ou la section si le tube est unique) munies de jonctions mâle-femelle (13) avec embout mâle (15), ou pêne (11) comportant au moins deux parties mobiles entre elles (92,93),(94,95), susceptibles de se rassembler soit par emboîtement des deux parties (92,93) lorsque le pêne bute au fond (96) de la partie femelle, soit par traction par un levier à came (100) de la partie la plus distale (94) vers la racine de l'embout ; les parties mobiles du pêne ou de l'embout étant prévues pour comprimer axialement une ou plusieurs bagues élastiques (97), de manière à faire varier leur diamètre extérieur dans le but de solidariser les parties mâle et femelle et de rétablir la continuité du cadre; la partie femelle peut comporter des zones de section plus étroite (98) délimitant entre elles des loges (99) destinées à l'expansion des bagues de blocage (97) lorsqu'elles sont écrasées.

2. Bicyclette avec cadre démontable, tube de potence permettant d'orienter le guidon, et pédales rabattables, conforme à la revendication 1, **caractérisée par** des jonctions mâle-femelle munies de dispositifs de connexion comportant une structure fixe située à cheval sur la section du cadre qui la divise en deux parties (17),(18), solidaires chacune d'une partie du cadre (9), (10), et sur lesquelles glissent deux structures mobiles (21),(22), permettant la séparation ou le rétablissement de la continuité du câble de frein ou de changement de pignon (14).

3. Bicyclette avec cadre démontable, tube de potence permettant d'orienter le guidon, et pédales rabattables, conforme aux revendications 1 et 2 ,**caractérisée par** des structures fixes (17),(18) munies de pistons (32),(33) avec des prolongements (34),(35), sous l'action de ressorts (36),(37); un pont (38) comprend un axe médian (39) et deux jambes (42),(43): lesdits prolongements et lesdites jambes permettent l'immobilisation ou le mouvement des structures mobiles et la séparation des deux parties du câble (14).

4. Bicyclette avec cadre démontable, tube de potence permettant d'orienter le guidon, et pédales rabattables, conforme aux revendications 1 et 2, **caractérisée par** un tube de potence sectionné en deux parties (44),(48), fixées entre elles par un moyen quelconque, la partie inférieure (44) est prolongée d'une tige (45) dont la base repose au niveau de la section sur un relief central (47) de forme géométrique quelconque (croix, carré, L, L inversé, quart de pas de vis etc...), la partie supérieure (48) s'enfile sur ladite tige (45) et comporte à sa base un relief complémentaire (49), s'emboîtant dans celui (47) de ladite partie inférieure lorsque les deux parties (44),(48) sont rapprochées; lesdits reliefs (47),(49) ont une configuration telle que quand les deux parties sont séparées, la rotation de la partie supérieure (48), par rapport à la partie inférieure (44) sur l'axe formé par la tige (45), permet son positionnement privilégié et celui de la barre de guidon (51) à 90° par rapport à sa position d'origine.

5. Bicyclette avec cadre démontable, tube de potence permettant d'orienter le guidon et pédales rabattables conforme aux revendications 1, 2, et 4, **caractérisée par** des pédales rabattables composées : d'un roulement à billes (69) qui tourne sur l'axe (68) de la pédale , ledit roulement à billes est serti dans l'armature en acier (70) munie à ses extrémités d'axe d'acier parallèles (71, 72) pourvus chacun d'une articulation (73, 74) dont l'axe appartient au plan permet à la semelle (77) de coulisser sur les axes parallèles (71, 72), de découvrir les articulations (73, 74) et de rabattre ladite semelle contre le bras de manivelle.

## Claims

1. Bicycle with detachable frame, handlebar stem which permit to orient the handlebar, and to pull down pedals that makes transportation easy **characterised by** framework sections (3, 4), (or the section if the frame has only one tube), provided with male-female connections (13) with a male nozzle (15) or a bolt (11) comprising at least two mobile parts (92, 93), (93, 95), these parts may either slot into each other when the bolt touches the bottom (96) of the female part, or join by pulling the lever (100) of the end (94) towards the root of the nozzle; the mobile part of the male nozzle or the bolt are designed to compress together one or several elastic rings (97) in order to keep firmly attached the male and female parts and uniting the frame; the female part may include tighter section zones (98) with spaces (99), so that these zones jam the ring (97) when compressed.

2. Bicycle with detachable frame, handlebar stem which permit to orient the handlebar, and to pull down pedals according to the claim 1, **characterised by** framework sections provided with connection pieces male-female, each a fixed structure straddling the framework section which separates in two parts (17), (18), each being firmly attached to a part of the framework (9), (10), on which two mobile structures slide (21), (22), permitting to put off and on the continuity of the brake cables or gear wheel (14).

3. Bicycle with detachable frame, handlebar stem which permit to orient the handlebar, and to pull down pedals according to the claim 1 and 2, **characterised by** fixed structures (17), (18), provided with pistons (32), (33), with extensions (34), (35), with pressure of springs (36), (37); a bridge (38) comprises a median axle (39) and two shanks (42), (43): these extensions and the shanks allow the movement of the mobile structures and the separation of both cable parts (14).

4. Bicycle with detachable frame, handlebar stem which permit to orient the handlebar, and to pull down pedals according to the claim 1 and 2, **characterised by** a handlebar stem sectioned into two parts (44), (48), attached by various methods, the lower part (44) extended by a shank (45), the lower section (44) has a central relief (47) with any geometrical shape (cross, square, L, reversed L, quarter of a thread), the upper part (48) has a complementary central relief (49), which fits together when the two parts (44), (48) are fitted. These notches (47), (49) are made so that when both parts (44, 48) are separated the rotation of the upper part (48), on the axle formed by the shank (45), enables it to be positioned and also that of the handlebar (51) at 90° of its original position.

5. Bicycle with detachable frame, handlebar stem which permit to orient the handlebar, and to pull down pedals according to the claim 1, 2 and 4 **characterised by** pedals provided with ball bearing (69) which pivot around the axle of the pedal (68). These ball bearings are inserted on the steel framework (70), this framework is provided at both ends with two steelfolding bars (71,72) which are parallels together, the axles of the joints (73, 74) belong to the plan of the axles (71, 72); steel tubes (75,76) incorporated in the front bar (78) and the rear bar (79) of the pedal plate (77); a device of attaching for the sole (77) by a screw (81) to the framework (70) or the end of the axles (71, 72) for their release enables the sole to slide on the parallel axles (71, 72), to show joints (73, 74) and to fold down each pedal plate against the crankest arm.

## Patentansprüche

1. Fahrrad mit demontierbarem Rahmen, Rohrschaft zum Ausrichten der Lenkstange und umklappbaren Pedalen, um den Transport zu erleichtern, **dadurch gekennzeichnet, dass** die Rahmenschnitte (3,4), (oder der Schnitt, wenn es ein einzelnes Rohr ist) mit Steckverbindungen (13) mit Einsteckendstück (15) oder Riegel (11) ausgestattet sind, die zumindest zwei untereinander bewegliche Teile (92,93,94,95) umfassen, die dafür geeignet sind, entweder durch Zusammenstecken der beiden Teile (92,93), wenn der Riegel am Grund (96) des Aufnahmeteils anschlägt, oder durch Ziehen des entfernteren Teils (94) in Richtung des Ansatzes des Endstücks mittels eines Nockenhebels (100); wobei die beweglichen Teile des Riegels oder des Endstücks vorgesehen sind, um einen oder mehrere elastische Ringe (97) axial zu komprimieren, so dass ihr Außendurchmesser verändert wird, mit dem Ziel, die beiden Verbindungsteile zusammenzuhalten und die Durchgängigkeit des Rahmen wiederherzustellen; der Aufnahmeteil kann engere Schnittzonen (98) aufweisen, die untereinander Kammern (99) begrenzen, die für die Ausdehnung der Blockierringe (97) bestimmt sind, sobald diese zusammengedrückt werden.

2. Fahrrad mit demontierbarem Rahmen, Rohrschaft zum Ausrichten der Lenkstange und umklappbaren Pedalen nach Anspruch 1, **dadurch gekennzeichnet, dass** die Steckverbindungen mit Verbindungsvorrichtungen ausgestattet sind, die eine fixe Struktur aufweisen, die auf dem Rahmenschnitt umgreifend angeordnet ist, der sie in zwei Teile teilt (17,18), die jeder mit einem Teil des Rahmens (9,10) zusammenhalten und auf denen zwei bewegliche Strukturen (21,22) gleiten, wodurch die Trennung oder Wiederherstellung der Durchgängigkeit des Brems- oder des Schaltkabels (14) ermöglicht wird.

3. Fahrrad mit demontierbarem Rahmen, Rohrschaft zum Ausrichten der Lenkstange und umklappbaren Pedalen nach den Ansprüchen 1 und 2, **dadurch gekennzeichnet, dass** die fixen Strukturen (17,18) mit Kolben (32,33) mit Verlängerungen (34,35) unter der Einwirkung von Federn (36,37) ausgestattet sind; eine Brücke (38) umfasst eine Mittelachse (39) und zwei Beine (42,43); die besagten Verlängerungen und die besagten Beine ermöglichen die Blockierung oder die Bewegung der beweglichen Strukturen und die Trennung der beiden Teile des Kabels (14).

4. Fahrrad mit demontierbarem Rahmen, Rohrschaft zum Ausrichten der Lenkstange und umklappbaren Pedalen nach den Ansprüchen 1 und 2, **dadurch gekennzeichnet, dass** ein Rohrschaft in zwei Teile (44,48) eingeteilt ist, die untereinander durch irgendein Mittel befestigt sind, wobei der untere Teil (44) durch einen Schaft (45) verlängert wird, dessen Ansatz auf Höhe des Schnitts auf einem zentralen Relief (47) mit irgendeiner geometrischen Form (Kreuz, Viereck, L, umgekehrtes L, Viertel Gewindesteigung usw.) aufsitzt, der obere Teil (48) auf den besagten Schaft (45) aufgefädelt wird und an seinem Ansatz ein komplementäres Relief (49) besitzt, das in jenes (47) des besagten unteren Teils hineingesteckt wird, wenn die beiden Teile (44,48) verbunden werden; die besagten Reliefs (47,49) besitzen eine derartige Konfiguration, dass, wenn die beiden Teile getrennt werden, die Rotation des oberen Teils (48) auf der durch den Schaft (45) gebildeten Achse im Verhältnis zum unteren Teil (44) seine bevorzugte Positionierung und jene der Lenkstange (51) im Winkel von 90° gegenüber seiner Ausgangsposition ermöglicht.

5. Fahrrad mit demontierbarem Rahmen, Rohrschaft zum Ausrichten der Lenkstange und umklappbaren Pedalen nach den Ansprüchen 1, 2 und 4, **dadurch gekennzeichnet, dass** die umklappbaren Pedale bestehen aus: einem Kugellager (69), das sich um die Achse (68) des Pedals dreht, wobei das besagte Kugellager in das Stahlgestell (70) eingesetzt wird, das an seinen Enden mit parallelen Stahlachsen (71,72) versehen ist, die jede ein Gelenk (73,74) besitzen, dessen in der Ebene verlaufende Achse es der Fußauflage (77) ermöglicht, auf den parallelen Achsen (71,72) zu gleiten, die Gelenke (73,74) freizumachen und die besagte Fußauflage in Richtung der Tretkurbel zu klappen.
